# EUROPEAN PATENT SPECIFICATION

(11) **EP 3 901 534 B1**
(45) Date of publication and mention of the grant of the patent: **03.01.2024**
(21) Application number: 19903568.4
(22) Date of filing: 30.05.2019
(51) Int. Cl.: F24F 1/0011, F24F 13/20, F16B 5/06, F16B 5/12

(54) **AIR CONDITIONER INDOOR UNIT**
KLIMAANLAGENINNENRAUMEINHEIT
UNITÉ INTÉRIEURE DE CLIMATISEUR

(30) Priority: 29.12.2018 CN 201811646493
(43) Date of publication of application: 27.10.2021
(73) Proprietor: GD Midea Heating & Ventilating Equipment Co., Ltd., Foshan, Guangdong 528311 (CN); Midea Group Co., Ltd., Foshan, Guangdong 528311 (CN)
(72) Inventor: YE, Bin, Foshan, Guangdong 528311 (CN)
(74) Representative: Whitlock, Holly Elizabeth Ann
(86) International application number: PCT/CN2019/089265
(87) International publication number: WO 2020/133910

(56) References cited:
- WO-A1-2018/176557
- KR-A- 20040 041 445
- US-A- 5 575 326

## Description

### FIELD

The present application relates to a field of air conditioners, and more particular to an air conditioner indoor unit.

### BACKGROUND

An air conditioner generally is provided with an air outlet frame at an air outlet side of its housing. In order to ensure convenience of assembly, disassembly and maintenance of the air outlet frame, usually, the air outlet frame is detachably mounted to the housing of the air conditioner.

In the related art, in order to ensure mounting stability of the air outlet frame, the air outlet frame is usually connected to the housing of the air conditioner by long screw studs. Thus, when mounting, the housing of the air conditioner often needs to be moved and aligned with the air outlet frame to realise the mounting. That is, the air outlet frame can only be passively mounted relative to the housing, such that the mounting of the air outlet frame becomes time-consuming and labour-intensive, reducing mounting efficiency of the air outlet frame.

KR20040041445 A relates generally to an air conditioner, wherein a lower plate is easily assembled and disassembled to clean a filter.

The utility model CN207778577U discloses a panel assembling structure for an air conditioner, comprising a clamping hook slot and a panel mounting frame which is clamped into the slot.

### SUMMARY

An objective of the present invention is to provide an air conditioner indoor unit and is aimed to solve technical problems of time consuming, labour-intensive and inefficient mounting of an air outlet frame and a housing of an air conditioner in the related art.

The present invention is defined in claim 1 and provides an air conditioner indoor unit, and two opposite sides of the air conditioner indoor unit are an air outlet side and a leeward side respectively. The air conditioner indoor unit includes a panel assembly and an air outlet frame inserted to the panel assembly. A length direction of the air outlet frame is defined as a first dimension, a width direction of the air outlet frame is defined as a second dimension, and a plane perpendicular to the first dimension and the second dimension is defined as a third dimension.

The panel assembly defines a mounting through cavity provided close to the air outlet side, and the air outlet frame is mounted at the mounting through cavity. The panel assembly is provided with an assembly strip at an edge of the mounting through cavity. The assembly strip defines a first through hole and a second through hole therein. The air outlet frame is provided with a snap hook and an insertion plate at an edge thereof. The snap hook passes through the first through hole and is hooked to an outside of the assembly strip to limit movement of the air outlet frame in the third dimension. The insertion plate is inserted into the second through hole and slides in the second through hole, and the insertion plate has a front end clamped to a front end of the second through hole in an insertion direction, and the insertion plate limits movement of the air outlet frame in the first dimension and the second dimension.

In some embodiments, the second through hole includes a first sub through hole and a second sub through hole in communication with the first sub through hole, the insertion plate passes through the first sub through hole and is clamped to a front end of the second sub through hole in the insertion direction, the first sub through hole has a tapered mouth shape, an opening direction of the tapered mouth is arranged away from the insertion direction of the insertion plate.

In some embodiments, the assembly strip defines at least one limiting hole therein, the air outlet frame is provided with at least one knob at a side thereof towards the assembly strip, and after the front end of the insertion plate is clamped to the front end of the second through hole in the insertion direction of the insertion plate, each knob is elastically snapped into a corresponding limiting hole.

In some embodiments, a side of the snap hook towards the assembly strip forms a guiding face, and when the insertion plate is inserted into the second through hole, the guiding face guides the assembly strip and the snap hook to abut against each other.

In some embodiments, the snap hook includes a connecting plate and a hooking plate, the connecting plate is provided at an edge of the air outlet frame, the hooking plate is provided at a side of the connecting plate away from the air outlet frame, and the hooking plate passes through the first through hole and is hooked to an outside of the assembly strip, the guiding face is formed at a side of the hooking plate towards the first through hole.

In some embodiments, the first through hole is defined in the assembly strip along the first dimension, fitting direction of the hooking plate and the first through hole is the same as the insertion direction of the insertion plate and the second through hole.

In some embodiments, the insertion plate is provided on the connecting plate, and the first through hole and the second through hole are in communication with each other.

In some embodiments, the insertion plate and the connecting plate are spaced apart, and the first through hole and the second through hole are spaced apart.

In some embodiments, a side of the connecting plate towards the assembly strip extends a limiting rib in a protruding manner, and the limiting rib abut against an inner side wall of the mounting through cavity when the hooking plate passes through the first through hole and is hooked to the outside of the assembly strip.

In some embodiments, a side of the connecting plate away from the insertion plate extends at least one reinforcing rib in a protruding manner.

In some embodiments, the hooking plate and the insertion plate are provided with a fixing plate therebetween.

In some embodiments, the air outlet frame includes an outer frame plate and a main frame body, the outer frame plate is mounted to the main frame body, the snap hook and the insertion plate are both provided at an edge of the outer frame plate, a side of the outer frame plate along a width direction thereof is provided with a side frame plate, the side frame plate and the main frame body defines an assembly clearance therebetween, and the snap hook and the insertion plate are both located in the assembly clearance.

The above-described one or more technical solutions in the air conditioner indoor unit provided by embodiments of the present invention at least have one of the following technical effects. With the air conditioner indoor unit provided by embodiments of the present invention, in the process of the air outlet frame being mounted at the mounting through cavity of the panel assembly, the snap hook and the insertion plate provided at the edge of the air outlet frame are respectively inserted into the first through hole and the second through hole defined in the assembly strip provided at the edge of the mounting through cavity, thus, the snap hook passes through the first through hole and is hooked to the outside of the assembly strip to limit movement of the air outlet frame away from or towards the panel assembly, i.e., the movement in the third dimension. Furthermore, after the insertion plate is inserted into the second through hole, it can slide in the second through hole, and the front end of the insertion plate can be clamped to the front end of the second through hole in the insertion direction, thus the fit between the insertion plate and the second through hole not only limits the movement of the air outlet frame in the length direction, but also limits the movement of the air outlet frame in the width direction. That is, the fit between the insertion plate and the second through hole limits movement of the air outlet frame in the first dimension and the second dimension. Thus, the snap hook and the insertion plate are fitted with the first through hole and the second through hole respectively to realise limitation to multiple degrees of freedom of the air outlet frame relative to the panel assembly. In this way, the air conditioner indoor unit provided by embodiments of the present invention realises detachable connection between the air outlet frame and the panel assembly by fitting the snap hook and the insertion plate with the first through hole and the second through hole respectively, without the aid of a screw. Meanwhile, since the multiple degrees of freedom of the panel assembly are limited by fitting the snap hook and the insertion plate with the first through hole and the second through hole respectively, this also ensures reliability of the air outlet frame mounting to the panel assembly. So, the mounting of the air outlet frame is realised without the aid of the screw, an active mounting of the air outlet frame relative to the panel assembly can be realised, to save the mounting time, realise the labour-saving mounting and improve the mounting efficiency.

### BRIEF DESCRIPTION OF THE DRAWINGS

To describe technical solutions in embodiments of the present invention more clearly, the following will briefly introduce the accompanying drawings. The accompanying drawings described below show some embodiments of the present invention, and those skilled in the art can obtain other drawings based on these drawings without paying creative efforts.
FIG. 1 is a schematic view of an air conditioner indoor unit provided by an embodiment of the present invention;
FIG. 2 is a schematic exploded view of a panel assembly and an air outlet frame of an air conditioner indoor unit provided by an embodiment of the present invention;
FIG. 3 is a partially enlarged view of portion A in FIG. 2;
FIG. 4 is another schematic exploded view of a panel assembly and an air outlet frame of an air conditioner indoor unit provided by an embodiment of the present invention;
FIG. 5 is a partially enlarged view of portion B in FIG. 4;
FIG. 6 is a partially enlarged view of portion C in FIG. 4;
FIG. 7 is a schematic view of a panel assembly and an outer frame plate of an air conditioner indoor unit provided by an embodiment of the present invention; and FIG. 8 is a partially enlarged view of portion D in FIG. 7.

In which the reference numerals are as follows:
10-air conditioner indoor unit; 11—air outlet side; 12-leeward side;
13-panel assembly;14-air outlet frame; 15-outer frame plate;
16-main frame body; 17-flipping cover plate; 131-mounting through cavity;
132-assembly strip; 133-first through hole; 134-second through hole;
135-first sub through hole; 136-second sub through hole; 137-limiting hole;
141-snap hook; 142-insertion plate; 143-knob;
144-guiding face; 145-connecting plate; 146-hooking plate;
147-limiting rib; 148-reinforcing rib; 149-fixing plate;
151-side frame plate; 152-assembly clearance; 153-assembling through cavity.

### DETAILED DESCRIPTION

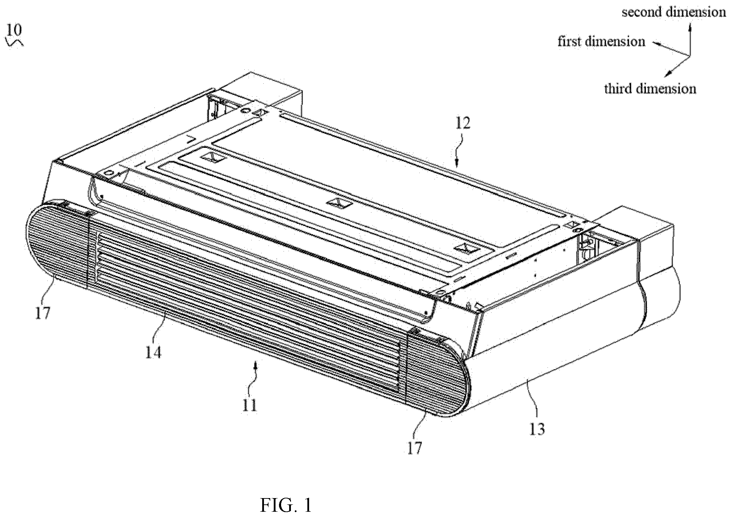

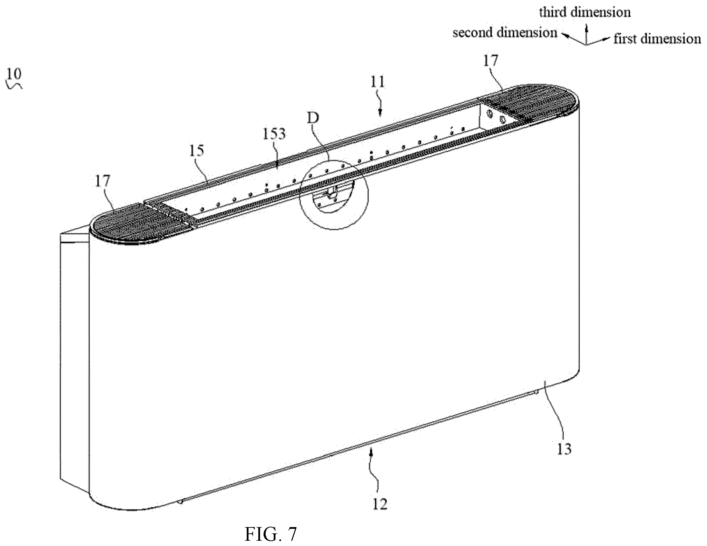

Embodiments of the present invention will be described in detail and examples of the embodiments will be illustrated in the drawings, where same or similar reference numerals are used to indicate same or similar members or members with same or similar functions. The embodiments described herein with reference to figures 1~8 are explanatory, which are used to illustrate the present invention, but shall not be construed to limit the present invention.

In the specification of embodiments of the present invention, it is to be understood that terms such as "length," "width," "upper," "lower," "front," "rear," "left," "right," "vertical," "horizontal," "top," "bottom," "inner," "outer," should be construed to refer to the orientation as then described or as shown in the drawings under discussion. These relative terms are for convenience of description of embodiments of the present invention and do not require that the present invention be constructed or operated in a particular orientation, and thus cannot be understood as limitations to embodiments of the present invention.

In addition, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present invention, the term "a plurality of" means two or more than two, unless specified otherwise.

In embodiments of the present invention, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements. Specific meanings of the above-described terms in embodiments of the present invention can be understood by those skilled in the art according to specific situations.

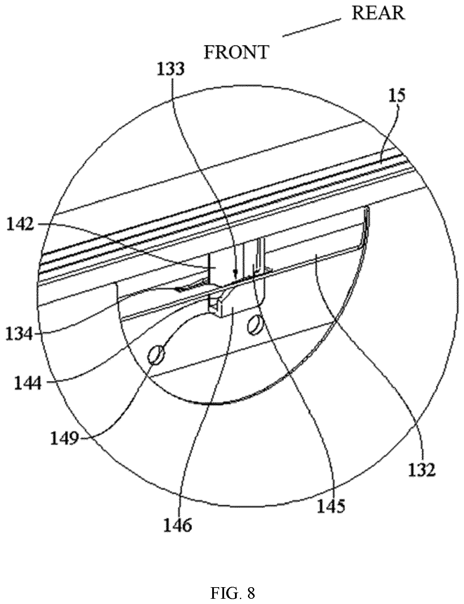

As illustrated in FIGS. 1∼3 and 5, in one of the embodiments of the present invention, an air conditioner indoor unit 10 is provided. The air conditioner indoor unit 10 has an air outlet side 11 and a leeward side 12 opposite the air outlet side 11. The air conditioner indoor unit 10 has a first dimension, a second dimension and a third dimension. The air conditioner indoor unit 10 includes a panel assembly 13 and an air outlet frame 14 inserted to the panel assembly 13. A length direction of the air outlet frame 14 is defined as the first dimension, a width direction of the air outlet frame 14 is defined as the second dimension, and a plane perpendicular to the first dimension and the second dimension is defined as the third dimension. The panel assembly 13 defines a mounting through cavity 131, and the mounting through cavity 131 is arranged close to the air outlet side 11. The air outlet frame 14 is mounted at the mounting through cavity 131. The panel assembly 13 is provided with an assembly strip 132 at an edge of the mounting through cavity 131. The assembly strip 132 defines a first through hole 133 and a second through hole 134. An edge of the air outlet frame 14 is provided with a snap hook 141 and an insertion plate 142. The snap hook 141 passes through the first through hole 133 and is hooked to an outside of the assembly strip 132 to limit movement of the air outlet frame 14 in the third dimension. The insertion plate 142 is inserted into the second through hole 134 and slides in the second through hole 134, a front end of the insertion plate 142 is clamped to a front end of the second through hole 134 in the insertion direction, and the insertion plate 142 limits movement of the air outlet frame 14 in the first dimension and the second dimension. The "front" described herein may refer to FIG. 8, and FIG. 8 shows a state in which neither of the snap hook 141 and the insertion plate 142 is inserted in place.

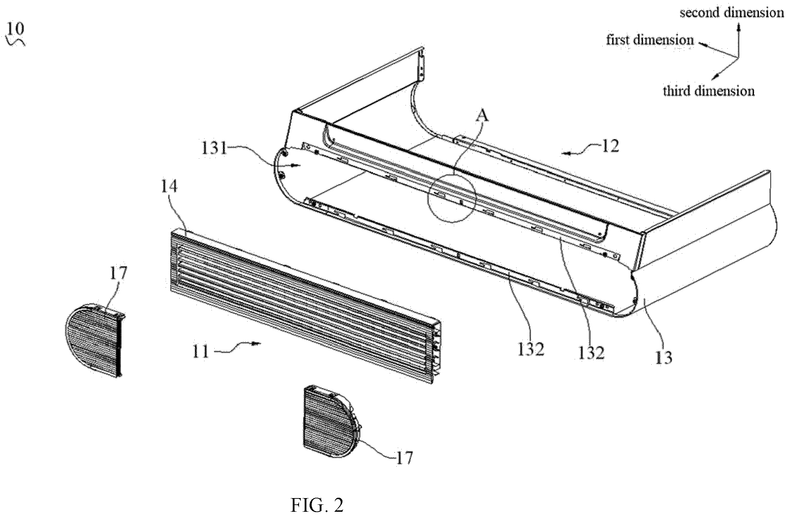

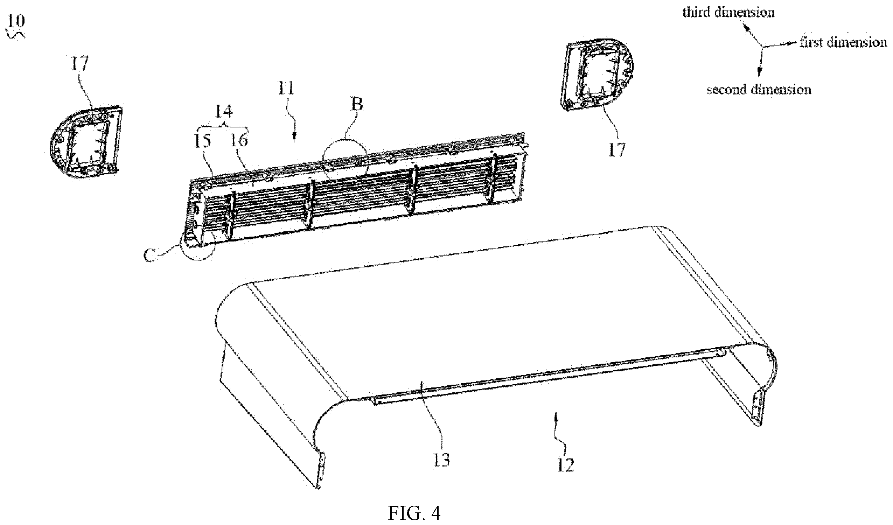

Specifically, one or a plurality of snap hooks 141 and one or a plurality of first through holes 133 may be provided. When a plurality of snap hooks 141 and a plurality of first through holes 133 are provided, the snap hooks 141 are all provided at an outer edge of the air outlet frame 14 and generally distributed in a ring shape (as an example illustrated in FIG. 4, each of upper and lower sides of the air outlet frame 14 is provided with a plurality of snap hooks 141 spaced apart in a left-right direction, and left and right sides of the air outlet frame 14 may be provided with no snap hook 141); the first through holes 133 are all defined in the assembly strip 132 and generally distributed in a ring shape (as an example illustrated in FIG. 2, each of upper and lower sides of the assembly strip 132 is provided with a plurality of first through holes 133 spaced apart in the left-right direction, and left and right sides of the assembly strip 132 may be provided with no first through hole 133); the snap hooks 141 are arranged in one-to-one correspondence with the first through holes 133, and each snap hook 141 has the same assembly direction as the corresponding first through hole 133.

Similarly, one or a plurality of insertion plates 142 and one or a plurality of second through holes 134 may be provided. When a plurality of insertion plates 142 and a plurality of second through holes 134 are provided, the insertion plates 142 are all provided at the outer edge of the air outlet frame 14 and generally distributed in a ring shape (as an example illustrated in FIG. 4, each of the upper and lower sides of the air outlet frame 14 is provided with a plurality of insertion plates 142 spaced apart in the left-right direction, and the left and right sides of the air outlet frame 14 may be provided with no insertion plate 142); the second through holes 134 are all defined in the assembly strip 132 and generally distributed in a ring shape (as an example illustrated in FIG. 2, each of the upper and lower sides of the assembly strip 132 is provided with a plurality of second through holes 134 spaced apart in the left-right direction, and the left and right sides of the assembly strip 132 may be provided with no second through hole 134); the insertion plates 142 are arranged in one-to-one correspondence with the second through holes 134, and each insertion plate 142 has the same assembly direction as the corresponding second through hole 134.

In the process of assembling the air outlet frame 14 to the panel assembly 13, since the snap hook 141 and the insertion plate 142 are both secured to the air outlet frame 14, the insertion plate 142 and the snap hook 141 are linked (i.e., simultaneously movable). Therefore, in the process in which the insertion plate 142 is slid in the second through hole 134 and the front end of the insertion plate 142 is clamped to the second through hole 134, the snap hook 141 and the insertion plate 142 are slid simultaneously, such that the snap hook 141 can complete actions of passing through the first through hole 133 and being hooked to the assembly strip 132. In this way, a periphery of the air outlet frame 14 can be firmly mounted to the panel assembly 13 by passing the snap hook 141 through the first through hole 133 and hooking it to the assembly strip 132.

With the air conditioner indoor unit 10 provided by embodiments of the present invention, in the process of the air outlet frame 14 being mounted at the mounting through cavity 131 of the panel assembly 13, the snap hook 141 and the insertion plate 142 that are provided at the edge of the air outlet frame 14 are respectively inserted into the first through hole 133 and the second through hole 134 that are defined in the assembly strip 132 provided at the edge of the mounting through cavity 131, thus, the snap hook 141 passes through the first through hole 133 and is hooked to the outside of the assembly strip 132 to limit movement of the air outlet frame 14 away from or towards the panel assembly 13, i.e., the movement in the third dimension. Furthermore, after the insertion plate 142 is inserted into the second through hole 134, it can slide in the second through hole 134, and the front end of the insertion plate 142 can be clamped to the front end of the second through hole 134 in the insertion direction, thus the fit between the insertion plate 142 and the second through hole 134 not only limits the movement of the air outlet frame 14 in the length direction, but also limits the movement of the air outlet frame 14 in the width direction.

That is, the fit between the insertion plate 142 and the second through hole 134 limits movement of the air outlet frame 14 in the first dimension and the second dimension. Thus, the snap hook 141 and the insertion plate 142 are fitted with the first through hole 133 and the second through hole 134 respectively to realise limitation to multiple degrees of freedom of the air outlet frame 14 relative to the panel assembly 13. In this way, the air conditioner indoor unit 10 provided by embodiments of the present invention realises detachable connection between the air outlet frame 14 and the panel assembly 13 by fitting the snap hook 141 and the insertion plate 142 with the first through hole 133 and the second through hole 134 respectively, without the aid of a screw. Meanwhile, since the multiple degrees of freedom of the panel assembly 13 are limited by fitting the snap hook 141 and the insertion plate 142 with the first through hole 133 and the second through hole 134 respectively, this also ensures reliability of the air outlet frame 14 mounting to the panel assembly 13. So, the mounting of the air outlet frame 14 is realised without the aid of the screw, an active mounting of the air outlet frame 14 relative to the panel assembly 13 can be realised, to save the mounting time, realise the labour-saving mounting and improve the mounting efficiency.

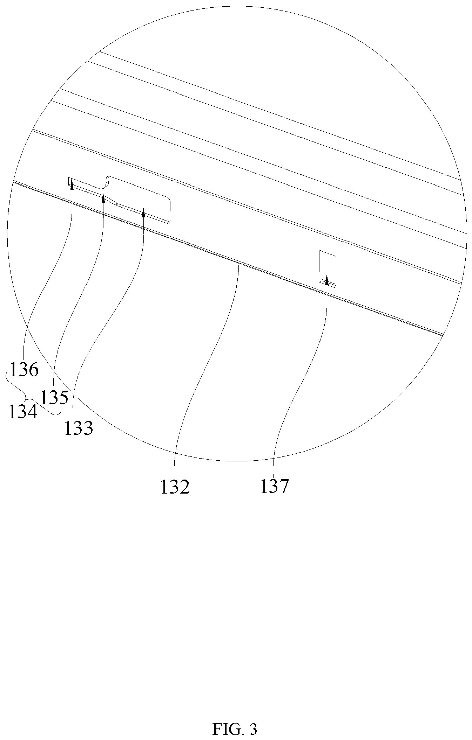

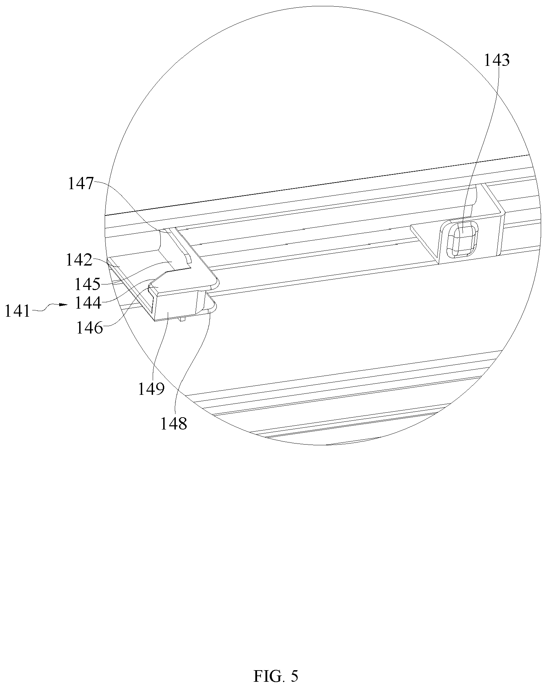

In an embodiment of the present invention, as illustrated in FIGS. 3 and 5, the second through hole 134 of the air conditioner indoor unit includes a first sub through hole 135 and a second sub through hole 136 in communication with the first sub through hole 135. The insertion plate 142 passes through the first sub through hole 135 and is clamped to a front end of the second sub through hole 136 in the insertion direction. The first sub through hole 135 has a tapered mouth shape, and an opening direction of the tapered mouth is arranged away from the insertion direction of the insertion plate 142. That is, along the insertion direction of the insertion plate 142, a diameter of the first sub through hole 135 decreases gradually. Specifically, the second through hole 134 includes the first sub through hole 135 and the second sub through hole 136, and the first sub through hole 135 defines a tapered mouth arranged away from the insertion direction, thus in the process of the insertion plate 142 being inserted into the second sub through hole 136, it will first enter the first sub through hole 135, and is guided by the tapered mouth, to ensure that the insertion plate 142 can be smoothly inserted into the second sub through hole 136. Furthermore, the insertion plate 142 is clamped to the front end of the second sub through hole 136 in the insertion direction, such that the limitation of the insertion plate 142 relative to the assembly strip 132 is realised, and further limitation of the air outlet frame 14 relative to the panel assembly 13 in the first dimension and the second dimension is realised.

In an embodiment of the present invention, as illustrated in FIGS. 3~5, the assembly strip 132 of the air conditioner indoor unit defines at least one limiting hole 137, and a side of the air outlet frame 14 towards the assembly strip 132 is provided with at least one knob 143. Each knob 143 is elastically snapped into a corresponding limiting hole 137 after the front end of the insertion plate 142 is clamped to the front end of the second through hole 134 in the insertion direction of the insertion plate 142. Specifically, through the above-described arrangement, in the process of the air outlet frame 14 being assembled to the panel assembly 13, after the front end of the insertion plate 142 is clamped to the front end of the second through hole 134 in the insertion direction, the snap hook 141 has also passed through the first through hole 133 and been hooked to assembly strip 132 as the insertion plate 142 and the snap hook 141 are linked, and at this time, the knob 143 is moved into the limiting hole 137 along with overall movement of the air outlet frame 14 and snapped into the limiting hole 137. When the knob 143 is elastically snapped into the limiting hole 137, it would produce a sound, and an operator can determine whether the air outlet frame 14 and the panel assembly 13 are assembled in place by listening, to realise blind assembly of the air outlet frame 14 relative to the panel assembly 13.

In an embodiment of the present invention, as illustrated in FIGS. 5 and 8, a side of the snap hook 141 of the air conditioner indoor unit towards the assembly strip 132 forms a guiding face 144, and the guiding face 144 guides the assembly strip 132 and the snap hook 141 to abut against each other when the insertion plate 142 is inserted into the second through hole 134. Specifically, the guiding face 144 is an inclined face, and an angle between the guiding face 144 and an edge of the second through hole 134 is an obtuse angle. Thus, the guiding face 144 can move along with the overall air outlet frame 14 relative to the panel assembly 13 to abut against the edge of the second through hole 134 and can slide relative to the edge of the second through hole 134, such that an upper end face of the snap hook 141 adjacent to the guiding face 144 is driven to abut against the edge of the second through hole 134 snugly after the guiding face 144 leaves the edge of the second through hole 134, to realise a relatively firm hook fit of the snap hook 141 and the assembly strip 132. Meanwhile, the assembly strip 132 is often a sheet metal part, and the sheet metal part is easy to bend and deform in an actual assembly process. So, the relatively snug hook fit of the snap hook 141 and the assembly strip 132 is realised such that inherent sheet metal deformation of the assembly strip 132 is ensured to be inhibited effectively.

In an embodiment of the present invention, as illustrated in FIG. 5, the snap hook 141 of the air conditioner indoor unit includes a connecting plate 145 and a hooking plate 146. The connecting plate 145 is provided at an edge of the air outlet frame 14, the hooking plate 146 is provided at a side of the connecting plate 145 away from the air outlet frame 14, and the hooking plate 146 passes through the first through hole 133 and is hooked to the outside of the assembly strip 132. The guiding face 144 is formed at a side of the hooking plate 146 towards the first through hole 133. Specifically, along the second dimension, the connecting plate 145 is provided at the edge of the air outlet frame 14, and along the first dimension, the hooking plate 146 is provided at a side of the connecting plate 145 in the second dimension.

In an embodiment of the present invention, as illustrated in FIG. 5, the first through hole 133 is defined in the assembly strip 132 along the first dimension, and fitting direction of the hooking plate 146 and the first through hole 133 is the same as the insertion direction of the insertion plate 142 and the second through hole 134. Thus, the fitting direction of the hooking plate 146 and the first through hole 133 and the length direction of the air outlet frame 14 are located in the same dimension, such that the air outlet frame 14 can be provided to the panel assembly 13 in a slidable manner along its length direction. Furthermore, there is enough assembly space for arranging the snap hook 141 and the insertion plate 142 at its edge in the length direction, such that the number of the snap hooks 141 and the insertion plates 142 can be appropriately increased, and the mounting stability of the air outlet frame 14 and the panel assembly 13 is further improved.

In an embodiment of the present invention, as illustrated in FIG. 5, the insertion plate 142 of the air conditioner indoor unit is provided to the connecting plate 145, and the first through hole 133 and the second through hole 134 are in communication with each other. Specifically, by providing the insertion plate 142 to the connecting plate 145 and communicating the first through hole 133 with the second through hole 134, the insertion plate 142 and the snap hook 141 are an integrally formed part, and the first through hole 133 and the second through hole 134 can also be made at one time, which reduces overall manufacturing costs of the air outlet frame 14. Meanwhile, by connecting the insertion plate 142 to the connecting plate 145, the strength of the insertion plate 142 and the connecting plate 145 is enhanced, and possibility of fracture of the insertion plate 142 or the connecting plate 145 during assembly is effectively reduced.

In an embodiment of the present invention, as illustrated in FIG. 5, the insertion plate 142 of the air conditioner indoor unit is provided at the same side of the connecting plate 145 where the hooking plate 146 is provided, and is spaced apart from the hooking plate 146. Specifically, by providing the insertion plate 142 and the hooking plate 146 at the same side, it is also ensured that respective fitting directions of the two with the first through hole 133 and the second through hole 134 are the same, to avoid mutual interference. Furthermore, by spacing the insertion plate 142 and the hooking plate 146 on the connecting plate 145 apart, it is also ensured that the insertion plate 142 and the hooking plate 146 are prevented from mutual interference.

In an embodiment of the present invention, as illustrated in FIG. 5, the insertion plate 142 of the air conditioner indoor unit is spaced apart from the connecting plate 145, and the first through hole 133 is spaced apart from the second through hole 134. Specifically, by spacing the insertion plate 142 and the connecting plate 145 apart and spacing the first through hole 133 and the second through hole 134 apart, assembly positions of the air outlet frame 14 and the panel assembly 13 are evenly distributed, and it is further ensured that all parts of the air outlet frame 14 are uniformly stressed, which is less prone to stress concentration.

In an embodiment of the present invention, as illustrated in FIG. 5, a side of the connecting plate 145 of the air conditioner indoor unit towards the assembly strip 132 extends a limiting rib 147 in a protruding manner, and the limiting rib 147 abut against an inner side wall of the mounting through cavity 131 when the hooking plate 146 passes through the first through hole 133 and is hooked to the outside of the assembly strip 132. Specifically, since the limiting rib 147 exists and the limiting rib 147 can abut against the inner side wall of the mounting through cavity 131, the limiting rib 147 can ensure that sheet metal deformation of the inner side wall of the mounting through cavity 131 will not occur, and further ensure that fitting position of the assembly strip 132 provided on the inner wall of the mounting through cavity 131 will not change, to further improve assembly accuracy of the air outlet frame 14 and the panel assembly 13.

In an embodiment of the present invention, as illustrated in FIG. 5, a side of the connecting plate 145 of the air conditioner indoor unit away from the insertion plate 142 extends at least one reinforcing rib 148 in a protruding manner. Specifically, by providing the reinforcing rib 148 on connecting plate 145, the overall strength of the connecting plate 145 is promoted, and the stability of the insertion plate 142 and the hooking plate 146 on it is further ensured.

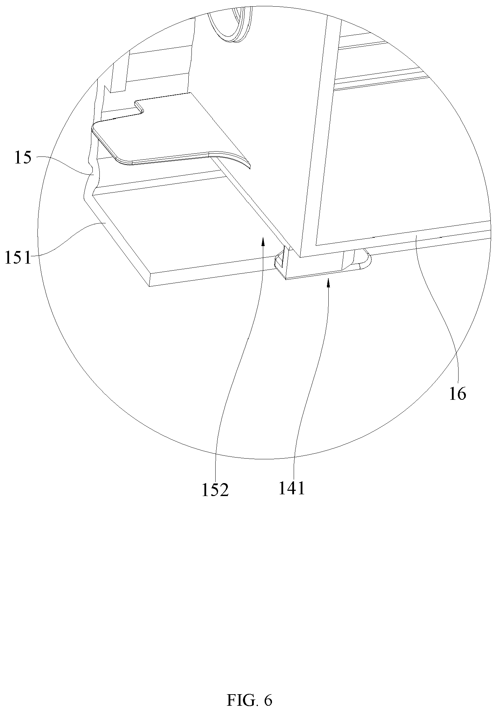

In an embodiment of the present invention, as illustrated in FIGS. 6~8, the air outlet frame 14 of the air conditioner indoor unit includes an outer frame plate 15 and a main frame body 16, the outer frame plate 15 is mounted to the main frame body 16, and the snap hook 141 and the insertion plate 142 are both provided at an edge of the outer frame plate 15.

In an embodiment of the present invention, as illustrated in FIGS. 6~8, a side of the outer frame plate 15 along its width direction is provided with a side frame plate 151. An assembly clearance 152 is defined between the side frame plate 151 and the main frame body 16. The snap hook 141 and the insertion plate 142 are both located in the assembly clearance 152.

In an embodiment of the present invention, as illustrated in FIGS. 6~8, two opposite ends of the outer frame plate 151 in the length direction are also provided with flipping cover plates 17.

In an embodiment of the present invention, as illustrated in FIGS. 6~8, a fixing plate 149 is provided between the snap hook 141 and the insertion plate 142.

Specifically, due to existence of the side frame plate 151, the snap hook 141 and the insertion plate 142 located at a side of the side frame plate 151 can be provided in the assembly clearance 152 defined between the side frame plate 151 and the main frame body 16 to realise hidden mounting, which not only protects the snap hook 141 and the insertion plate 142, but also improves overall aesthetic degree of the air outlet frame 14. Meanwhile, the outer frame plate 15 defines an assembling through cavity 153 for mounting an air guiding grille, and the assembling through cavity 153 is in communication with the mounting through cavity 131.

Those described above are only preferred embodiments of the present invention and are not intended to limit the present invention as defined in the appended claims.

## Claims

1. An air conditioner indoor unit (10), two opposite sides of the air conditioner indoor unit (10) being an air outlet side (11) and a leeward side (12) respectively, and the air conditioner indoor unit (10) comprising: a panel assembly (13) and an air outlet frame (14) inserted to the panel assembly (13), a length direction of the air outlet frame (14) being defined as a first dimension, a width direction of the air outlet frame (14) being defined as a second dimension, a plane perpendicular to the first dimension and the second dimension being defined as a third dimension, wherein the panel assembly (13) defines a mounting through cavity (131) provided close to the air outlet side (11), the air outlet frame (14) is mounted at the mounting through cavity (131), the panel assembly (13) is provided with an assembly strip (132) at an edge of the mounting through cavity (131), the assembly strip (132) defines a first through hole (133) and a second through hole (134) therein, the air outlet frame (14) is provided with a snap hook (141) and an insertion plate (142) at an edge thereof, the snap hook (141) passes through the first through hole (133) and is hooked to an outside of the assembly strip (132) to limit movement of the air outlet frame (14) in the third dimension, the insertion plate (142) is inserted into the second through hole (134) and slides in the second through hole (134), and the insertion plate (142) has a front end clamped to a front end of the second through hole (134) in an insertion direction, the insertion plate (142) limits movement of the air outlet frame (14) in the first dimension and the second dimension.

2. The air conditioner indoor unit (10) according to claim 1, wherein the second through hole (134) comprises a first sub through hole (135) and a second sub through hole (136) in communication with the first sub through hole (135), the insertion plate (142) passes through the first sub through hole (135) and is clamped to a front end of the second sub through hole (136) in the insertion direction, the first sub through hole (135) has a tapered mouth shape, an opening direction of the tapered mouth is arranged away from the insertion direction of the insertion plate (142).

3. The air conditioner indoor unit (10) according to claim 1 or 2, wherein the assembly strip defines at least one limiting hole (137) therein, the air outlet frame (14) is provided with at least one knob (143) at a side thereof towards the assembly strip (132), and after the front end of the insertion plate (142) is clamped to the front end of the second through hole (134) in the insertion direction of the insertion plate, each knob (143) is elastically snapped into a corresponding limiting hole (137).

4. The air conditioner indoor unit (10) according to any one of claims 1-3, wherein a side of the snap hook (141) towards the assembly strip forms a guiding face (144), and when the insertion plate is inserted into the second through hole (134), the guiding face (144) guides the assembly strip and the snap hook (141) to abut against each other.

5. The air conditioner indoor unit (10) according to claim 4, wherein the snap hook (141) comprises a connecting plate (145) and a hooking plate (146), the connecting plate (145) is provided at an edge of the air outlet frame, the hooking plate (146) is provided at a side of the connecting plate (145) away from the air outlet frame, and the hooking plate (146) passes through the first through hole (133) and is hooked to an outside of the assembly strip, the guiding face (144) is formed at a side of the hooking plate (146) towards the first through hole (133).

6. The air conditioner indoor unit (10) according to claim 5, wherein the first through hole is defined in the assembly strip along the first dimension, fitting direction of the hooking plate (146) and the first through hole (133) is the same as the insertion direction of the insertion plate (142) and the second through hole (134).

7. The air conditioner indoor unit (10) according to claim 5 or 6, wherein the insertion plate (142) is provided on the connecting plate (145), and the first through hole (133) and the second through hole (134) are in communication with each other.

8. The air conditioner indoor unit (10) according to claim 5 or 6, wherein the insertion plate (142) and the connecting plate (145) are spaced apart, and the first through hole (133) and the second through hole (134) are spaced apart.

9. The air conditioner indoor unit (10) according to any one of claims 5-8, wherein a side of the connecting plate (145) towards the assembly strip (132) extends a limiting rib (147) in a protruding manner, and the limiting rib (147) abut against an inner side wall of the mounting through cavity (131) when the hooking plate (146) passes through the first through hole (133) and is hooked to the outside of the assembly strip (132).

10. The air conditioner indoor unit (10) according to any one of claims 5-9, wherein a side of the connecting plate (145) away from the insertion plate (142) extends at least one reinforcing rib (148) in a protruding manner.

11. The air conditioner indoor unit (10) according to any one of claims 5-10, wherein the hooking plate (146) and the insertion plate (142) are provided with a fixing plate (149) therebetween.

12. The air conditioner indoor unit (10) according to any one of claims 1-11, wherein the air outlet frame (14) comprises an outer frame plate (15) and a main frame body (16), the outer frame plate (15) is mounted to the main frame body (16), the snap hook (141) and the insertion plate (142) are both provided at an edge of the outer frame plate (15), a side of the outer frame plate (15) along a width direction thereof is provided with a side frame plate (151), the side frame plate (151) and the main frame body (16) defines an assembly clearance (152) therebetween, and the snap hook (141) and the insertion plate (142) are both located in the assembly clearance (152).

## Patentansprüche

1. Klimaanlagen-Inneneinheit (10), wobei es sich bei zwei gegenüberliegenden Seiten der Klimaanlagen-Inneneinheit (10) um eine Luftauslassseite (11) bzw. eine leewärtige Seite (12) handelt und die Klimaanlagen-Inneneinheit (10) Folgendes umfasst: eine Blendenanordnung (13) und einen in die Blendenanordnung (13) eingesteckten Luftauslassrahmen (14), wobei eine Längenrichtung des Luftauslassrahmens (14) als eine erste Dimension definiert ist, eine Breitenrichtung des Luftauslassrahmens (14) als eine zweite Dimension definiert ist und eine zu der ersten Dimension und der zweiten Dimension senkrechte Ebene als eine dritte Dimension definiert ist, wobei die Blendenanordnung (13) einen Befestigungsdurchgangshohlraum (131) definiert, der nahe der Luftauslassseite (11) bereitgestellt ist, der Luftauslassrahmen (14) an dem Befestigungsdurchgangshohlraum (131) befestigt ist, die Blendenanordnung (13) mit einem Einbaustreifen (132) an einer Kante des Befestigungsdurchgangshohlraums (131) versehen ist, der Einbaustreifen (132) ein erstes Durchgangsloch (133) und ein zweites Durchgangsloch (134) darin definiert, der Luftauslassrahmen (14) mit einem Schnapphaken (141) und einer Einsteckplatte (142) an einer Kante davon versehen ist, der Schnapphaken (141) durch das erste Durchgangsloch (133) gelangt und an eine Außenseite des Einbaustreifens (132) gehakt ist, um die Bewegung des Luftauslassrahmens (14) in der dritten Dimension zu begrenzen, die Einsteckplatte (142) in das zweite Durchgangsloch (134) eingesteckt ist und in dem zweiten Durchgangsloch (134) gleitet und die Einsteckplatte (142) ein vorderes Ende aufweist, das an einem in einer Einsteckrichtung vorderen Ende des zweiten Durchgangslochs (134) geklemmt wird, und die Einsteckplatte (142) die Bewegung des Luftauslassrahmens (14) in der ersten Dimension und der zweiten Dimension begrenzt.

2. Klimaanlagen-Inneneinheit (10) nach Anspruch 1, wobei das zweite Durchgangsloch (134) ein erstes Teildurchgangsloch (135) und ein zweites Teildurchgangsloch (136) in Verbindung mit dem ersten Teildurchgangsloch (135) umfasst, die Einsteckplatte (142) durch das erste Teildurchgangsloch (135) gelangt und an ein in der Einsteckrichtung vorderes Ende des zweiten Teildurchgangslochs(136) geklemmt wird, das erste Teildurchgangsloch (135) eine verjüngte Mündungsform aufweist und eine Öffnungsrichtung der verjüngten Mündung von der Einsteckrichtung der Einsteckplatte (142) abgewandt angeordnet ist.

3. Klimaanlagen-Inneneinheit (10) nach Anspruch 1 oder 2, wobei der Einbaustreifen mindestens ein Begrenzungsloch (137) darin definiert, der Luftauslassrahmen (14) mit mindestens einem Knopf (143) auf einer dem Einbaustreifen (132) zugewandten Seite desselben versehen ist und, nachdem das vordere Ende der Einsteckplatte (142) an das in der Einsteckrichtung der Einsteckplatte vordere Ende des zweiten Durchgangslochs (134) geklemmt ist, die Knöpfe (143) jeweils elastisch in ein entsprechendes Begrenzungsloch (137) geschnappt werden.

4. Klimaanlagen-Inneneinheit (10) nach einem der Ansprüche 1-3, wobei eine dem Einbaustreifen zugewandte Seite des Schnapphakens (141) eine Führungsfläche (144) bildet und, wenn die Einsteckplatte in das zweite Durchgangsloch (134) eingesteckt wird, die Führungsfläche (144) den Einbaustreifen und den Schnapphaken (141) führt, um aneinander anzustoßen.

5. Klimaanlagen-Inneneinheit (10) nach Anspruch 4, wobei der Schnapphaken (141) eine Verbindungsplatte (145) und eine Hakplatte (146) umfasst, die Verbindungsplatte (145) an einer Kante des Luftauslassrahmens bereitgestellt ist, die Hakplatte (146) auf einer von dem Luftauslassrahmen abgewandten Seite der Verbindungsplatte (145) bereitgestellt ist und die Hakplatte (146) durch das erste Durchgangsloch (133) gelangt und an eine Außenseite des Einbaustreifens gehakt wird, wobei die Führungsfläche (144) auf einer dem ersten Durchgangsloch (133) zugewandten Seite der Hakplatte (146) gebildet ist.

6. Klimaanlagen-Inneneinheit (10) nach Anspruch 5, wobei das erste Durchgangsloch in dem Einbaustreifen entlang der ersten Dimension definiert ist und die Zusammenbaurichtung der Hakplatte (146) und des ersten Durchgangslochs (133) gleich der Einsteckrichtung der Einsteckplatte (142) und des zweiten Durchgangslochs (134) ist.

7. Klimaanlagen-Inneneinheit (10) nach Anspruch 5 oder 6, wobei die Einsteckplatte (142) auf der Verbindungsplatte (145) bereitgestellt ist und das erste Durchgangsloch (133) und das zweite Durchgangsloch (134) miteinander in Verbindung stehen.

8. Klimaanlagen-Inneneinheit (10) nach Anspruch 5 oder 6, wobei die Einsteckplatte (142) und die Verbindungsplatte (145) voneinander beabstandet sind und das erste Durchgangsloch (133) und das zweite Durchgangsloch (134) voneinander beabstandet sind.

9. Klimaanlagen-Inneneinheit (10) nach einem der Ansprüche 5-8, wobei sich von einer dem Einbaustreifen (132) zugewandten Seite der Verbindungsplatte (145) eine Begrenzungsrippe (147) auf vorstehende Weise erstreckt und die Begrenzungsrippe (147) an einer Innenseitenwand des Befestigungsdurchgangshohlraums (131) anstößt, wenn die Hakplatte (146) durch das erste Durchgangsloch (133) gelangt und an die Außenseite des Einbaustreifens (132) gehakt wird.

10. Klimaanlagen-Inneneinheit (10) nach einem der Ansprüche 5-9, wobei sich von einer von der Einsteckplatte (142) abgewandten Seite der Verbindungsplatte (145) mindestens eine Verstärkungsrippe (148) auf vorstehende Weise erstreckt.

11. Klimaanlagen-Inneneinheit (10) nach einem der Ansprüche 5-10, wobei die Hakplatte (146) und die Einsteckplatte (142) mit einer Fixierungsplatte (149) dazwischen versehen sind.

12. Klimaanlagen-Inneneinheit (10) nach einem der Ansprüche 1-11, wobei der Luftauslassrahmen (14) eine Rahmenaußenplatte (15) und einen Rahmenhauptkörper (16) umfasst, die Rahmenaußenplatte (15) an dem Rahmenhauptkörper (16) befestigt ist, der Schnapphaken (141) und die Einsteckplatte (142) beide an einer Kante der Rahmenaußenplatte (15) bereitgestellt sind, eine Seite der Rahmenaußenplatte (15) entlang einer Breitenrichtung derselben mit einer Rahmenseitenplatte (151) versehen ist, die Rahmenseitenplatte (151) und der Rahmenhauptkörper (16) einen Einbauzwischenraum (152) dazwischen definieren und sich der Schnapphaken (141) und die Einsteckplatte (142) beide in dem Einbauzwischenraum (152) befinden.

## Revendications

1. Unité intérieure de climatiseur (10), deux côtés opposés de l'unité intérieure de climatiseur (10) étant un côté de sortie d'air (11) et un côté sous le vent (12) respectivement, et l'unité intérieure de climatiseur (10) comportant : un ensemble formant panneau (13) et un cadre de sortie d'air (14) inséré dans l'ensemble formant panneau (13), une direction allant dans le sens de la longueur du cadre de sortie d'air (14) étant définie comme étant une première dimension, une direction allant dans le sens de la largeur du cadre de sortie d'air (14) étant définie comme étant une deuxième dimension, un plan perpendiculaire par rapport à la première dimension et à la deuxième dimension étant défini comme étant une troisième dimension, dans laquelle l'ensemble formant panneau (13) définit une cavité traversante de montage (131) mise en oeuvre à proximité du côté de sortie d'air (11), le cadre de sortie d'air (14) est monté au niveau de la cavité traversante de montage (131), l'ensemble formant panneau (13) est doté d'une bande d'assemblage (132) au niveau d'un bord de la cavité traversante de montage (131), la bande d'assemblage (132) définit un premier trou traversant (133) et un deuxième trou traversant (134) dans celle-ci, le cadre de sortie d'air (14) est doté d'un crochet à mousqueton (141) et d'une plaque d'insertion (142) au niveau d'un bord de celui-ci, le crochet à mousqueton (141) traverse le premier trou traversant (133) et est accroché sur une partie extérieure de la bande d'assemblage (132) pour limiter le mouvement du cadre de sortie d'air (14) dans la troisième dimension, la plaque d'insertion (142) est insérée jusque dans le deuxième trou traversant (134) et coulisse dans le deuxième trou traversant (134), et la plaque d'insertion (142) a une extrémité avant serrée sur une extrémité avant du deuxième trou traversant (134) dans une direction allant dans le sens de l'insertion, la plaque d'insertion (142) limite le mouvement du cadre de sortie d'air (14) dans la première dimension et dans la deuxième dimension.

2. Unité intérieure de climatiseur (10) selon la revendication 1, dans laquelle le deuxième trou traversant (134) comporte un premier sous-trou traversant (135) et un deuxième sous-trou traversant (136) en communication avec le premier sous-trou traversant (135), la plaque d'insertion (142) traverse le premier sous-trou traversant (135) et est serrée sur une extrémité avant du deuxième sous-trou traversant (136) dans la direction allant dans le sens de l'insertion, le premier sous-trou traversant (135) a une forme de bec effilé, une direction allant dans le sens de l'ouverture du bec effilé est agencée à l'opposé de la direction allant dans le sens de l'insertion de la plaque d'insertion (142).

3. Unité intérieure de climatiseur (10) selon la revendication 1 ou la revendication 2, dans laquelle la bande d'assemblage définit au moins un trou de limitation (137) dans celle-ci, le cadre de sortie d'air (14) est doté d'au moins un bouton (143) au niveau d'un côté de celui-ci vers la bande d'assemblage (132), et après le serrage de l'extrémité avant de la plaque d'insertion (142) sur l'extrémité avant du deuxième trou traversant (134) dans la direction allant dans le sens de l'insertion de la plaque d'insertion, chaque bouton (143) est inséré par encliquetage de manière élastique jusque dans un trou de limitation correspondant (137).

4. Unité intérieure de climatiseur (10) selon l'une quelconque des revendications 1 à 3, dans laquelle un côté du crochet à mousqueton (141) vers la bande d'assemblage forme une face de guidage (144), et quand la plaque d'insertion est insérée jusque dans le deuxième trou traversant (134), la face de guidage (144) guide la bande d'assemblage et le crochet à mousqueton (141) à venir prendre appui l'un contre l'autre.

5. Unité intérieure de climatiseur (10) selon la revendication 4, dans laquelle le crochet à mousqueton (141) comporte une plaque de raccordement (145) et une plaque d'accrochage (146), la plaque de raccordement (145) est mise en oeuvre au niveau d'un bord du cadre de sortie d'air, la plaque d'accrochage (146) est mise en oeuvre au niveau d'un côté de la plaque de raccordement (145) à l'opposé du cadre de sortie d'air, et la plaque d'accrochage (146) traverse le premier trou traversant (133) et est accrochée sur une partie extérieure de la bande d'assemblage, la face de guidage (144) est formée au niveau d'un côté de la plaque d'accrochage (146) vers le premier trou traversant (133).

6. Unité intérieure de climatiseur (10) selon la revendication 5, dans laquelle le premier trou traversant est défini dans la bande d'assemblage le long de la première dimension, la direction de mise en place de la plaque d'accrochage (146) et du premier trou traversant (133) est la même que la direction allant dans le sens de l'insertion de la plaque d'insertion (142) et du deuxième trou traversant (134).

7. Unité intérieure de climatiseur (10) selon la revendication 5 ou la revendication 6, dans laquelle la plaque d'insertion (142) est mise en oeuvre sur la plaque de raccordement (145), et le premier trou traversant (133) et le deuxième trou traversant (134) sont en communication l'un par rapport à l'autre.

8. Unité intérieure de climatiseur (10) selon la revendication 5 ou la revendication 6, dans laquelle la plaque d'insertion (142) et la plaque de raccordement (145) sont espacées l'une par rapport à l'autre, et le premier trou traversant (133) et le deuxième trou traversant (134) sont espacés l'un par rapport à l'autre.

9. Unité intérieure de climatiseur (10) selon l'une quelconque des revendications 5 à 8, dans laquelle un côté de la plaque de raccordement (145) vers la bande d'assemblage (132) étend une nervure de limitation (147) d'une manière saillante, et la nervure de limitation (147) vient prendre appui contre une paroi latérale intérieure de la cavité traversante de montage (131) quand la plaque d'accrochage (146) traverse le premier trou traversant (133) et est accrochée sur la partie extérieure de la bande d'assemblage (132).

10. Unité intérieure de climatiseur (10) selon l'une quelconque des revendications 5 à 9, dans laquelle un côté de la plaque de raccordement (145) à l'opposé de la plaque d'insertion (142) étend au moins une rainure de renfort (148) d'une manière saillante.

11. Unité intérieure de climatiseur (10) selon l'une quelconque des revendications 5 à 10, dans laquelle la plaque d'accrochage (146) et la plaque d'insertion (142) sont dotées d'une plaque de fixation (149) entre elles.

12. Unité intérieure de climatiseur (10) selon l'une quelconque des revendications 1 à 11, dans laquelle le cadre de sortie d'air (14) comporte une plaque de cadre extérieure (15) et un corps de cadre principal (16), la plaque de cadre extérieure (15) est montée sur le corps de cadre principal (16), le crochet à mousqueton (141) et la plaque d'insertion (142) sont tous les deux mis en oeuvre au niveau d'un bord de la plaque de cadre extérieure (15), un côté de la plaque de cadre extérieure (15) le long d'une direction allant dans le sens de la largeur de celui-ci est doté d'une plaque de cadre latérale (151), la plaque de cadre latérale (151) et le corps de cadre principal (16) définissent un jeu d'assemblage (152) entre eux, et le crochet à mousqueton (141) et la plaque d'insertion (142) sont tous les deux situés dans le jeu d'assemblage (152).
